# DEMANDE DE BREVET EUROPEEN

(11) **EP 0 836 957 A1**
(43) Date de publication de la demande: **22.04.1998**
(21) Numéro de dépôt: 97402350.9
(22) Date de dépôt: 07.10.1997
(51) Int. Cl.: B60C 17/06

(54) **Dispositif de roulage à plat pour véhicule automobile, en particulier pour véhicule de tourisme**

(30) Priorité: 16.10.1996 FR 9612612
(71) Demandeur: HUTCHINSON, F-75008 Paris (FR)
(72) Inventeur: Boni, Bernard, 95430 Butry/Oise (FR); Michelot, Eric, 95000 Cergy (FR); Ratet, Florence, 45200 Amilly (FR)
(74) Mandataire: Ramey, Daniel

(57) **Abrégé**

Dispositif de roulage à plat pour véhicule automobile, comprenant un anneau de roulage (10) monté serré sur la jante (12) d'une roue (11) et comportant une base annulaire (14) logée dans un puits de jante (16) et une bande de roulement (20) dont la largeur axiale (L) est sensiblement égale à la distance entre les sommets des bossages (60) de retenue des talons (62) du pneumatique et dont la hauteur radiale (H1) par rapport aux sommets des bossages est supérieure à 55 % de la hauteur radiale interne (H2) du pneumatique.

L'invention concerne essentiellement des dispositifs de roulage à plat pour véhicules de tourisme.

## Description

L'invention concerne un dispositif de roulage à plat pour véhicule automobile, en particulier pour un véhicule de tourisme, du type comprenant un anneau de roulage en matière plastique destiné à être fixé sur la jante d'une roue du véhicule et formé d'un ou plusieurs secteurs dont au moins deux extrémités sont réunies par des moyens de liaison à longueur réglable, le ou chaque secteur précité comprenant une base annulaire destinée à être reçue dans un puits de jante, une bande annulaire radialement externe formant bande de roulement en cas de roulage à plat, et une âme annulaire radiale raccordant la base annulaire à la bande de roulement.

Des dispositifs de ce type sont décrits par exemple dans la Demande de Brevet Européen n° 0 721 854 de la Demanderesse.

Un tel dispositif est très performant, puisqu'il permet au conducteur d'un véhicule de parcourir plus d'une centaine de kilomètres à une vitesse de l'ordre de 80 à 100 km/h avec une roue à plat.

On a cependant constaté, avec des dispositifs de ce type, une tendance très nette au survirage lorsqu'une roue arrière du véhicule est à plat, ce survirage pouvant surprendre des conducteurs inexpérimentés ou insuffisamment attentifs qui ne se sont pas aperçus qu'une roue du véhicule était à plat ou bien qui l'ont constaté mais qui conduisent un peu trop vite.

La présente invention a pour but des perfectionnements à ces dispositifs de roulage à plat, qui permettent de réduire fortement la tendance du véhicule au survirage dans le cas du roulage à plat d'une roue arrière, en limitant l'amplitude et la rapidité du survirage de telle sorte qu'un conducteur même peu expérimenté et peu attentif puisse réagir aisément et en temps utile.

Elle propose, à cet effet, un dispositif de roulage à plat du type décrit ci-dessus, caractérisé en ce que la largeur ou dimension axiale de la bande de roulement du ou de chaque secteur précité est au moins sensiblement égale à la distance entre les sommets des bossages formés sur la jante de part et d'autre du puits de jante pour la retenue des talons du pneumatique, et en ce que cette bande de roulement est axialement centrée par rapport auxdits bossages.

Cette caractéristique du dispositif selon l'invention permet de bloquer les flancs du pneumatique en cas de roulage à plat, de limiter les mouvement transversaux du pneumatique et d'assurer une meilleure stabilité du véhicule en virage.

De plus, le dispositif selon l'invention permet d'assurer le maintien du pneumatique sur la jante en évitant, grâce à sa largeur et à son positionnement, un éventuel passage d'un talon du pneumatique par dessus l'un des bossages de retenue précités, en empêchant ainsi le déjantage du pneumatique et en supprimant de ce fait les risques de perte de contrôle du véhicule en cas de roulage à plat.

Selon une autre caractéristique de l'invention, la hauteur radiale du ou de chaque secteur précité par rapport auxdits bossages est supérieure à 55 % environ de la hauteur radiale interne du pneumatique par rapport à ces bossages.

On a constaté que cette caractéristique a également une grande importance dans la limitation du survirage en cas de roulage avec une roue arrière à plat.

Dans un mode de réalisation préféré de l'invention, l'anneau de roulage est formé d'au moins deux secteurs, dont deux extrémités sont reliées par une articulation flexible telle qu'une lame d'acier à ressort ancrée dans les secteurs et dont les deux autres extrémités sont reliées par des moyens à longueur réglable, chaque secteur pouvant être réalisé en polyamide 6.6 armé de fibres de verre dont la résistance aux chocs est éventuellement renforcée par incorporation de nodules d'élastomère dans la matière plastique avant injection de celle-ci dans un moule.

De façon générale, le dispositif de roulage à plat selon l'invention, destiné en particulier à un véhicule de tourisme, offre une sécurité de conduite nettement améliorée en limitant le survirage en cas de roulage à plat sur une roue arrière et en permettant une conduite en toute sécurité avec une roue arrière ayant une pression de gonflage très faible.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique partielle en coupe axiale d'une roue de véhicule automobile équipée d'un dispositif selon l'invention ;
- la figure 2 est une vue schématique en perspective d'un secteur semi-circulaire du dispositif selon l'invention ;
- les figures 3 et 4 représentent schématiquement, en vue de face et en perspective, des moyens de liaison des secteurs du dispositif selon l'invention ;
- les figures 5 et 6 représentent schématiquement des dispositifs selon l'invention comportant des liaisons ou articulations flexibles.

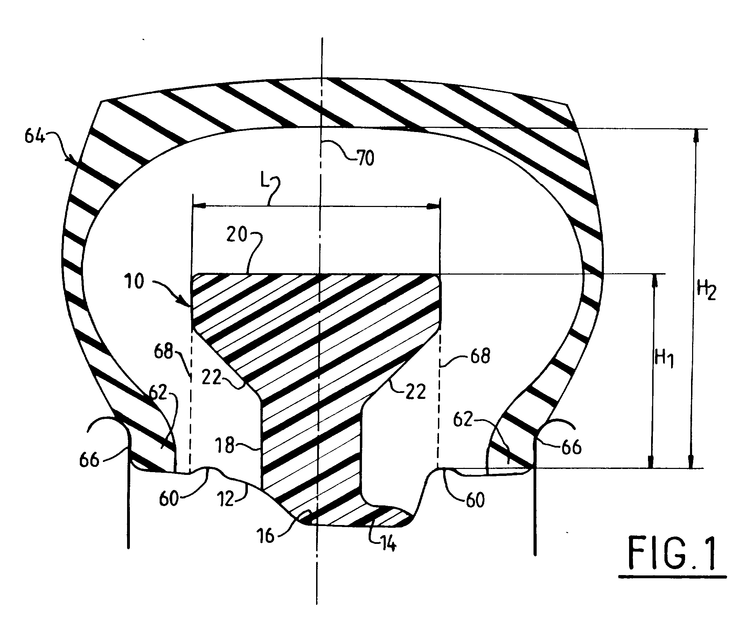

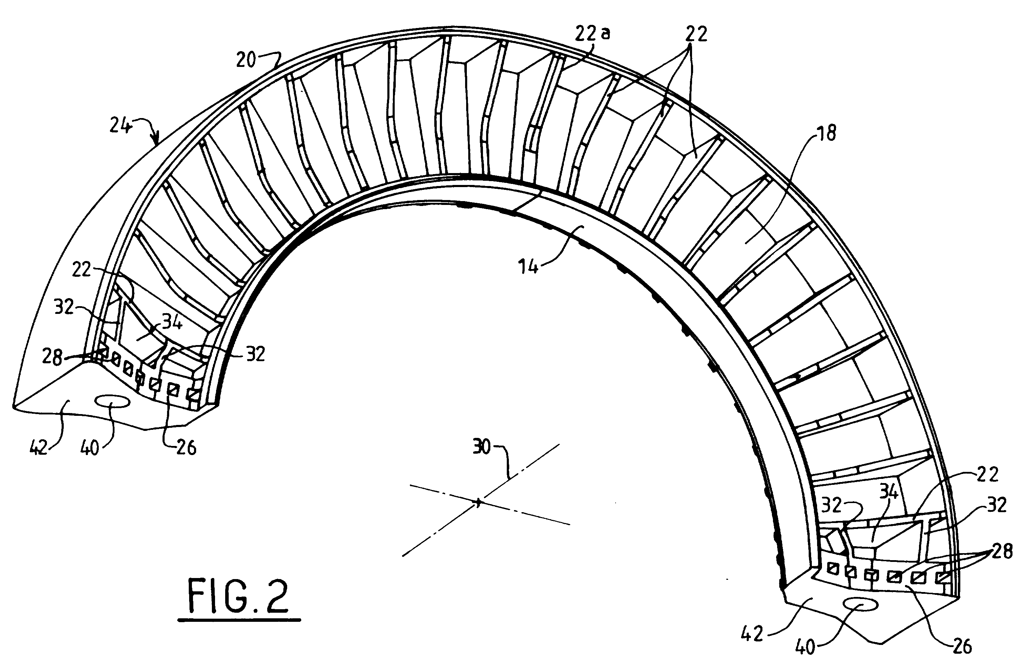

Le dispositif selon l'invention, dont un exemple de réalisation est représenté aux figures 1 et 2, est en particulier destiné à équiper des véhicules de tourisme de grande série et est constitué essentiellement d'un anneau de roulage 10 en matière plastique, monté serré sur la jante 12 d'une roue 11 d'un type classique (jante non démontable), cet anneau comprenant une base annulaire 14 logée dans un puits de jante 16 et reliée par une âme annulaire radiale 18 à une bande annulaire 20 radialement externe qui constitue la bande de roulement du dispositif en cas de roulage à plat, la liaison entre la base annulaire 14 et la bande de roulement 20 étant renforcée par des nervures axiales 22 (c'est-à-dire des nervures contenues dans des plans passant par l'axe de la roue 10) qui vont en s'élargissant de la base annulaire 14 à la bande de roulement 20 comme on le voit bien sur la vue en perspective de la figure 2.

La forme de la face radialement interne de la base annulaire 14 est adaptée à celle du puits de jante 16 de façon à ce que l'anneau 10 soit immobilisé axialement quand il est serré sur la jante 12.

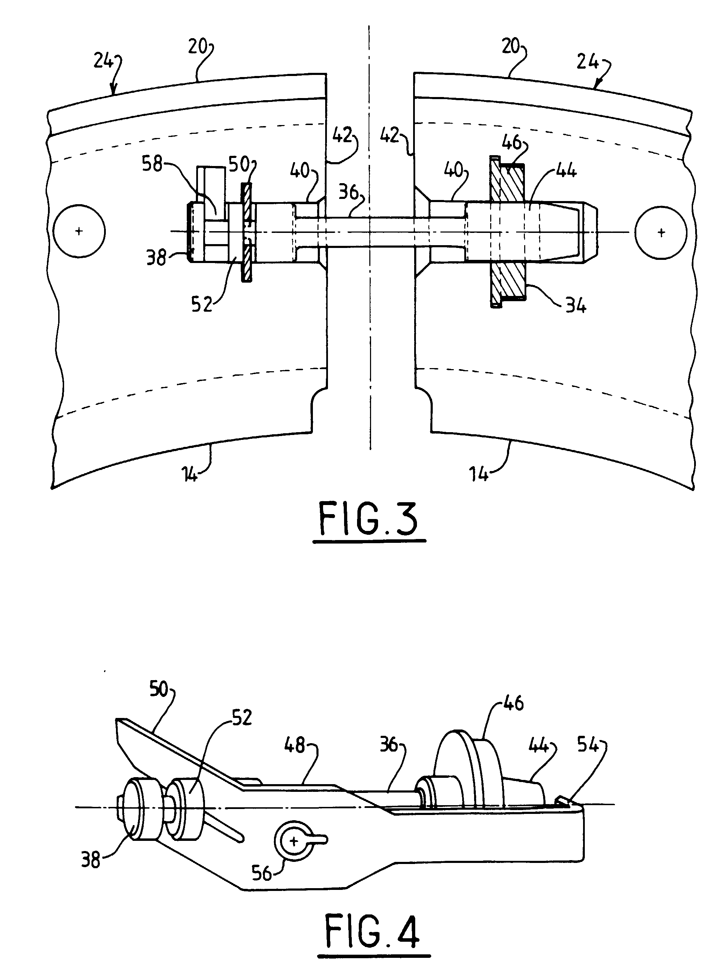

De préférence, l'anneau 10 est formé de deux secteurs semi-circulaires 24 (s'étendant chacun sur 180°) dont l'un est représenté en figure 2, ces deux secteurs étant réunis l'un à l'autre à leurs extrémités par des moyens de liaison dont un mode de réalisation est représenté schématiquement aux figures 3 et 4. Avantageusement, deux extrémités en regard des secteurs 24 peuvent être reliées par une articulation flexible de longueur fixe, telle par exemple qu'une lame d'acier à ressort dont les extrémités sont rendues solidaires des extrémités des deux secteurs 24.

Chaque secteur est réalisé par moulage par injection d'une matière plastique appropriée ayant une bonne tenue en température dans les conditions prévues d'utilisation, c'est-à-dire une matière plastique qui est susceptible de conserver au moins 50 % de ses propriétés mécaniques à des températures de l'ordre de 130-140°C. Cette matière doit également avoir un prix aussi faible que possible. Dans le mode de réalisation actuellement préféré de l'invention, cette matière est un polyamide 6.6 renforcé par des fibres de verre et dont la résistance aux chocs peut être améliorée par incorporation de nodules d'élastomère dans les granulés de matière plastique avant injection dans un moule de fabrication d'un secteur 24.

Les nervures axiales 22 qui s'étendent entre la base 14 et la bande de roulement 20 d'un secteur 24 sont droites et travaillent uniquement en compression. Dans l'exemple de réalisation de la figure 2, elles sont au nombre de 21 en étant espacées angulairement de 7,75°. Ces nervures 22 ont toutes la même épaisseur (3 mm dans l'exemple de la figure 2) à l'exception de la nervure centrale 22a dont l'épaisseur est deux fois plus importante (pour des questions de facilité d'écoulement de matière lors de l'injection).

Les extrémités du secteur 24 comportent des parois radiales 26 de plus grande épaisseur dans lesquelles sont formés des trous 28 orientés parallèlement à l'axe 30 du secteur 24 pour alléger ces parois d'extrémité 26 et leur conférer une structure en treillis augmentant leur rigidité pour leur permettre de résister aux efforts qui leur seront appliqués par les moyens de liaison des secteurs.

De préférence, ces trous 28 sont formés de part et d'autre de l'âme 18 sans traverser celle-ci.

Les parois d'extrémité 26 sont reliées aux nervures axiales 22 les plus proches par des cloisons 32 qui s'étendent parallèlement à la bande de roulement 20 de façon délimiter des logements 34 destinés à recevoir certaines parties des moyens de liaison des secteurs, ces logements 34 étant conçus de façon à ne pas former de vide dans l'âme 18.

Les moyens de liaison des extrémités de secteur qui sont représentés dans les figures 3 et 4 comprennent essentiellement une tige 36 dont la tête 38 est engagée dans un trou 40 débouchant sur une face d'extrémité 42 d'un secteur 24 et s'étendant perpendiculairement à celle-ci, et dont l'extrémité opposée 44 est emmanchée à force dans une bague ou rondelle 46 de retenue solidaire de l'autre extrémité de secteur, cette bague ou rondelle 46 étant reçue dans un logement précité 34 de cette extrémité de secteur, dans lequel débouche un trou 40 s'étendant perpendiculairement depuis la face radiale d'extrémité 42 du secteur correspondant (pour simplifier le dessin de la figure 3, la représentation des parois 26, des cloisons 32 et des nervures 22 a été omise).

La bague ou rondelle 46 est réalisée en acier à ressort ou analogue et comporte sur sa périphérie interne des dents radiales qui vont s'appliquer fortement ou s'ancrer dans la matière de la tige 36, en retenant celle-ci contre tout effort visant à écarter l'une de l'autre les extrémités des secteurs 24 réunies par ces moyens de liaison.

Ces derniers comprennent également une clavette de sécurité 48 dont une extrémité 50 en forme de fourche est engagée et clipsée sur la tige 36 contre un épaulement 52 de celle-ci et vient s'appliquer sur une paroi ou cloison axiale du secteur 24 (par exemple sur la face interne de la paroi d'extrémité 26 du secteur) pour empêcher la tête 38 de la tige 36 de sortir du trou 40.

L'extrémité opposée de la clavette 48 est recourbée en forme de crochet 54 et vient s'engager dans un logement ou derrière une cloison axiale de l'autre secteur 24, pour empêcher ainsi toute augmentation de la distance entre les extrémités des deux secteurs.

La partie de la clavette 48, qui est voisine de l'extrémité en fourche 50, comporte un orifice fileté 56 destiné à recevoir une tige filetée (non représentée) dont l'extrémité est destinée à s'appliquer sur une partie du secteur 24 pour permettre, par vissage de cette tige filetée, d'écarter la clavette 48 de ce secteur et de la dégager de la tige 36.

Pour faciliter ce dégagement, une gorge 58 est formée sur la tige 36 entre sa tête 38 et l'épaulement précité 52, et est destinée à recevoir l'extrémité d'un tournevis qui peut prendre appui sur une paroi ou cloison radiale du secteur 24 correspondant et qui permet une action de levier sur la tête 38 pour écarter légèrement l'épaulement 52 de l'extrémité en fourche 50 de la clavette 48 et faciliter le retrait de celle-ci.

Ces moyens de liaison sont utilisés de la façon suivante :
la tige 36 est d'abord introduite dans le trou 40 d'un secteur 24 jusqu'à ce que sa tête 38 soit sensiblement dans la position représentée en figure 3, puis l'extrémité en fourche 50 de la clavette 48 est engagée sur la tige le long de l'épaulement 52 et est clipsée sur cette tige, la bague ou rondelle 46 est mise en place dans le logement 34 de l'autre secteur 24, puis les extrémités en regard des deux secteurs 24 sont rapprochées l'une de l'autre pour engager l'extrémité 44 de la tige 36 dans la rondelle ou bague 46. En poussant fortement les deux extrémités de secteur l'une vers l'autre, on emmanche à force l'extrémité 44 de la tige 36 dans la bague ou rondelle 46 jusqu'à ce que l'extrémité en crochet 54 de la clavette puisse être engagée dans le logement ou derrière la cloison du secteur 24 prévu à cet effet. L'effort d'emmanchement de la partie 44 de la tige 36 dans la bague ou rondelle 46 est par exemple de l'ordre de 200 kgf, et la traction qu'il faut appliquer à la tige 36 pour extraire son extrémité 44 de la bague ou rondelle 46 est de l'ordre de 600 à 700 kgf. Lorsque les secteurs 24 ainsi réunis sont serrés correctement sur la jante 12 de la roue, ils sont immobilisés en rotation sur celle-ci et peuvent résister à un couple de rotation de l'ordre de 200 Nm au minimum.

Pour assurer une tenue de route et une stabilité correcte en cas de roulage à plat et pour limiter le survirage, l'anneau 10 (et donc chaque secteur 24) doit avoir une hauteur radiale par rapport à la jante 12 qui est supérieure à une valeur minimum qui est de 55 % environ de la hauteur radiale interne du pneumatique et est de préférence comprise entre 56 et 58 % environ de celle-ci.

Dans l'exemple de réalisation de la figure 1, cette hauteur radiale est déterminée par rapport au sommet des bossages 60 qui sont formés sur la jante 12, de part et d'autre du puits de jante 16, pour la retenue des talons 62 du pneumatique 64 appliqués sur les rebords latéraux 66 de la jante 12. Dans le cas d'un pneumatique du type 155/70 R13 monté sur une jante d'un diamètre de 13 pouces (330,2 mm) ayant une largeur de 4,5 pouces (114,3 mm), la hauteur radiale H1 de l'anneau 10 au-dessus des bossages 60 est de 54 mm environ, la hauteur radiale interne H2 du pneumatique par rapport au sommet des bossages 60 est d'environ 96 mm, et le rapport H1/H2 est de 56,25 %.

La largeur axiale L de la bande de roulement 20 de l'anneau 10 doit être sensiblement égale ou supérieure à la distance entre les sommets des bossages 60 (cette largeur L est d'environ 70 mm dans l'exemple cité ci-dessus) et elle est centrée axialement par rapport à ces bossages (on voit en figure 1 que les extrémités axiales de la bande de roulement 20 sont sensiblement au droit des bossages 60 comme indiqué par les lignes 68 en traits pointillés).

La forme générale de l'anneau 10 est sensiblement symétrique par rapport au plan radial médian 70 de la roue et est approximativement centrée sur ce plan.

Le dispositif selon l'invention peut également comprendre un ou des bossages formés en saillie sur la bande de roulement 20 de l'anneau 10, ces bossages ayant de 3 à 5 mm d'épaisseur par exemple et étant réalisés en caoutchouc ou en thermoplastique élastomère ou intégrés à la bande de roulement lors de l'injection et permettant de générer du bruit et des vibrations en cas de roulage à plat ou avec un pneumatique dont la pression de gonflage est très faible pour alerter le conducteur et l'inciter à limiter la vitesse du véhicule. De préférence, la pression de gonflage d'un pneumatique à partir de laquelle le conducteur est alerté par du bruit ou des vibrations générés par les bossages de la bande de roulement 20 de l'anneau 10, est à une valeur où la conduite du véhicule n'est pas devenue dangereuse, ce qui permet au conducteur de regonfler le pneumatique avant qu'il ne soit tout à fait dégonflé, ou bien de rouler sur une distance importante à vitesse relativement limitée et en sécurité, le dispositif selon l'invention permettant de bloquer les flancs du pneumatique, de limiter les mouvements transversaux du pneumatique, d'assurer son maintien sur la jante en évitant tout risque de déjantage et de limiter le survirage lors du roulage avec une roue arrière à plat ou très peu gonflée.

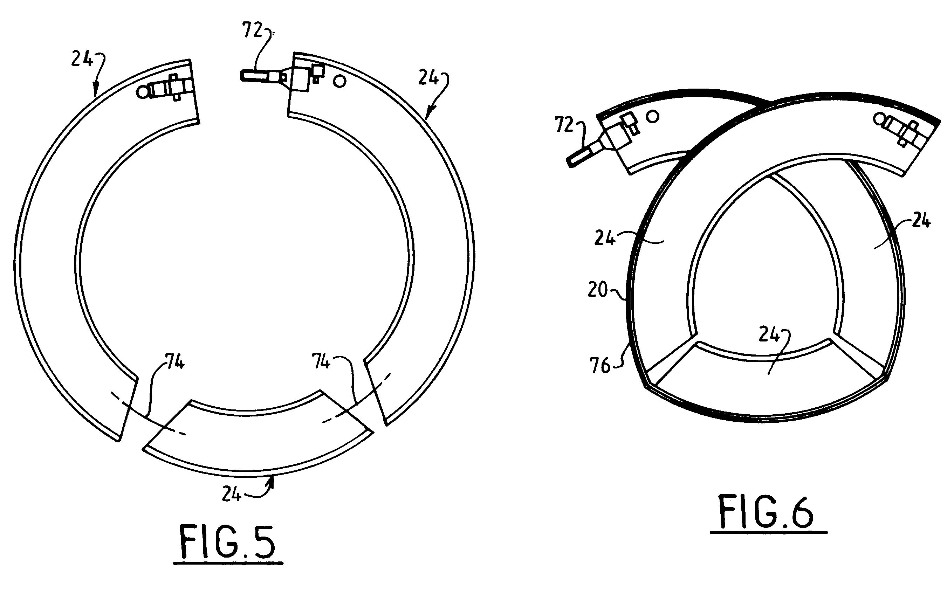

Dans les figures 5 et 6, on a représenté des dispositifs selon l'invention, qui sont en deux ou trois secteurs annulaires 24 reliés entre eux par des moyens 72 de liaison à longueur réglable tels que ceux des figures 3 et 4, et par des liaisons ou articulations flexibles ayant une longueur invariable.

Dans le mode de réalisation de la figure 5, ces liaisons flexibles sont constituées de bandes 74 inextensibles, par exemple des lames d'acier à ressort, dont les extrémités sont ancrées dans les secteurs 24.

Dans le mode de réalisation de la figure 6, les liaisons flexibles sont constituées par la bande de roulement 20 du dispositif, celle-ci étant réalisée en caoutchouc ou en élastomère et s'étendant de façon continue sur tout le périmètre du dispositif comme représenté. De plus, cette bande de roulement est renforcée par un élément circonférentiel inextensible 76 tel qu'un tissu de fibres de verre ou de matière synthétique (par exemple de "KEVLAR" ou analogue), un grillage, une tôle, etc., qui est noyé dans la bande de roulement et qui résiste aux efforts de serrage du dispositif sur la jante et aux efforts centrifuges.

L'intérêt des liaisons flexibles entre les secteurs 24 (que ces derniers soient au nombre de deux, trois ou davantage) est de faciliter beaucoup le montage du dispositif à l'intérieur d'un pneumatique sur une jante de roue qui est d'un type classique, c'est-à-dire non démontable.

## Revendications

1. Dispositif de roulage à plat pour véhicule automobile, tel en particulier qu'un véhicule de tourisme, comprenant un anneau de roulage (10) en matière plastique destiné à être monté fixement sur la jante (12) d'une roue et formé d'un ou plusieurs secteurs (24) dont au moins deux extrémités sont réunies par des moyens de liaison à longueur réglable, le ou chaque secteur (24) précité comprenant une base annulaire (14) destinée à être reçue dans un puits de jante (16), une bande annulaire (20) radialement externe formant bande de roulement en cas de roulage à plat et une âme annulaire radiale (18) raccordant la base annulaire (14) à la bande de roulement (20), caractérisé en ce que la largeur ou dimension axiale L de la bande de roulement (20) du ou de chaque secteur (24) précité est au moins sensiblement égale à la distance entre les sommets des bossages (62) formés sur la jante (12) de part et d'autre du puits de jante (16) pour la retenue des talons (62) du pneumatique, et en ce que cette bande de roulement (20) est axialement centrée par rapport aux bossages (60).

2. Dispositif selon la revendication 1, caractérisé en ce que la hauteur radiale (H1) du ou de chaque secteur précité (24) par rapport auxdits bossages (60) est supérieure à 55 % environ de la hauteur radiale interne (H2) du pneumatique par rapport à ces bossages.

3. Dispositif selon la revendication 2, caractérisé en ce que la hauteur radiale (H1) précitée du ou de chaque secteur (24) est comprise entre 56 et 58 % environ de la hauteur radiale interne (H2) précitée du pneumatique.

4. Dispositif selon l'une des revendications précédentes, caractérisé en ce que l'anneau de roulage (10) est de forme approximativement symétrique et centré sur le plan radial médian (70) de la roue.

5. Dispositif selon l'une des revendications précédentes, caractérisé en ce que le ou chaque secteur précité (24) est réalisé en polyamide 6.6 armé de fibres de verre.

6. Dispositif selon l'une des revendications 1 à 5, caractérisé en ce que la résistance aux chocs du ou de chaque secteur (24) est renforcée par incorporation de nodules d'élastomère dans la matière plastique constitutive du ou de chaque secteur (24), avant injection de cette matière.

7. Dispositif selon l'une des revendications précédentes, caractérisé en ce que l'âme (18) reliant la base (14) à la bande de roulement (20) est renforcée par des nervures axiales (22) dont la largeur axiale augmente de la base (14) à la bande de roulement (20).

8. Dispositif selon la revendication 7, caractérisé en ce que les nervures (22) sont séparées les unes des autres d'un intervalle angulaire égal à 7,75°.

9. Dispositif selon l'une des revendications précédentes, caractérisé en ce que chaque secteur (24) comprend des parois d'extrémité (26) plus épaisses que les nervures (22) précitées et délimitant des logements (34) et/ou des moyens d'appui pour les moyens de liaison des extrémités de secteur.

10. Dispositif selon l'une des revendications précédentes, caractérisé en ce que l'anneau de roulage (10) est formé d'au moins deux secteurs (24), dont deux extrémités sont reliées par une articulation flexible telle qu'une lame d'acier à ressort ancrée dans les secteurs et dont les deux autres extrémités sont reliées par des moyens à longueur réglable.

11. Dispositif selon l'une des revendications 1 à 9, caractérisé en ce que l'anneau de roulage est formé d'au moins deux secteurs (24), dont deux extrémités sont reliées par la bande de roulement de l'anneau, cette bande de roulement étant en caoutchouc ou en élastomère et comportant un élément circonférentiel de renforcement.

12. Dispositif selon une des revendications 1 à 11, caractérisé en ce que les moyens de liaison à longueur réglable sont du type à emmanchement à force et comprennent une tige cylindrique (36) montée à une extrémité de secteur et engageable dans une bague ou rondelle (46) montée dans l'autre extrémité de secteur et comportant des dents radiales sur son bord interne pour la retenue de la tige (36) précitée.

13. Dispositif selon l'une des revendications précédentes, caractérisé en ce que la bande de roulement (20) de l'anneau de roulage comprend au moins un bossage en saillie, permettant d'alerter le conducteur du véhicule en cas de roulage à plat ou de baisse significative de pression dans le pneumatique.
